# EUROPEAN PATENT SPECIFICATION

(11) **EP 2 711 291 B1**
(45) Date of publication and mention of the grant of the patent: **10.08.2016**
(21) Application number: 12400039.9
(22) Date of filing: 24.09.2012
(51) Int. Cl.: B64C 27/12, F01D 21/00

(54) **Shaft mounted rotor brake**
Wellenmontierte Rotorbremse
Frein de rotor monté sur un arbre

(43) Date of publication of application: 26.03.2014
(73) Proprietor: AIRBUS HELICOPTERS DEUTSCHLAND GmbH, 86609 Donauwörth (DE)
(72) Inventor: Doleschel, Andreas, 85653 Grosshelfendorf (DE); Gusmini, Roberto, 80335 München (DE); De Lamarliere, Sophie, 81245 München (DE)
(74) Representative: Schmid, Rudolf

(56) References cited:
- DE-A1- 10 343 055
- KR-A- 20100 087 523
- US-A- 4 129 202
- US-A1- 2008 277 213
- US-B1- 6 254 504

## Description

The invention is related to a shaft mounted rotor brake.

Rotor brakes are used in helicopters and in some types of helicopters they even are a safety-relevant system.

The document DE 693 11 484 T2 discloses a transmission with integrated brake particularly usable for vehicles. The transmission includes, in an oil bath inside a containment and support casing, an epicyclical reduction unit which is cinematically connectable to a drive unit by means of at least two gears, of which the driven one is axially fixed, is coaxial to a sun gear of the reduction unit and is associated therewith by means of a splined coupling. A disk brake is arranged between the epicyclical reduction unit and the driven gear and has at least one first disk rigidly coupled to an internally toothed ring gear which is rigidly coupled to the containment casing and at least one second disk which is rigidly coupled so as to rotate together with the driven gear. The disk brake is associated with axially movable packing pushers.

The document EP 0894 712 A2 discloses a helicopter rotor brake having a disk connected angularly to a helicopter rotor. A brake caliper has friction members cooperating with the disk; and an actuating device for moving the brake caliper, parallel to the plane of the disk, between a work position engaging the disk. The brake caliper may be operated to brake the rotor, and a release position releasing the disk and wherein any possibility of the friction members interacting with the disk is prevented.

The document DE 103 43 055 A1 discloses a rotor shaft mounted rotor brake with a braking force absorption element non-rotatable connected to said rotor shaft; a stationary brake actuator for hydraulically or mechanically actuating a braking force transmission element that is functionally coupled to the braking force absorption element so as to exert a braking effect; and at least one rotor speed-controlled, centrifugal force-actuated rotor brake deactivation device.

The document US6254504 B1 discloses a variable mode of operation in which clutches are locked and a clutch and a brake are unlocked, the power of an input shaft is branched to a traction transmission mechanism. By contrast, in a fixed mode of operation in which the clutches are unlocked and the clutch and the brake are locked, the power of the input shaft is not branched to the traction transmission mechanism. In this way, the fixed mode and the variable mode are selectively used, whereby noise reduction and enhanced fuel efficiency can be attained. According to this configuration, it is possible to provide a power transmission apparatus for helicopters in which the number of rotations of a main rotor or a tail rotor is continuously varied while maintaining the number of rotations of an engine constant.

Rotor brakes for helicopters may only be deployed on the ground and only once the (main) rotor has reached a certain speed, which is usually 40% to 50% of the rated rotor speed. Such a limitation is meaningful since, due to aerodynamic forces, the rotor speed drops relatively quickly to about 40% to 50% of the rated rotor speed, but after that, it decreases only relatively slowly. Dimensioning rotor brakes that are already effective at 70% to 100% of the rated rotor speed would entail very strong brakes, a substantial weight of the rotor brake as well as increased manufacturing costs. Therefore, especially in the civilian sector, such a design is neither desired nor, as a rule, necessary.

With conventional rotor brake systems, actuating the rotor brake above a value of 40% to 50% of the rated rotor speed can lead to deformation of components of the rotor brake, particularly of the brake disc, due to excessive thermal loads, in this speed range, excessive braking energy is applied to the brake system. In the extreme case, the structure of safety-relevant brake components such as, for example, the brake disk or the brake drum, can be changed and fail. As an example, an actuation of the rotor brake at 70% rather than at 50% of the rated rotor speed means that approximately twice as much braking energy has to be absorbed by the rotor brake system.

An operating error can occur with conventional rotor brakes. For example, it is possible for the pilot to accidentally actuate the rotor brake during flight, leading to overheating of the brake system components. Or the rotor brake can be actuated on the ground above the permissible speed of approximately 40% to 50% of the rated rotor speed has been reached which, as already mentioned, might lead to an overheating of the brake system components. With hydraulically activated brakes, an erroneous actuation of the braking function can also occur due to a temperature-related increase in the pressure of the hydraulic system or a malfunction of the hydraulic system.

It is an object of the invention to provide a rotor brake without the disadvantages of the state of the art.

The solution is provided with the features of claim 1.

According to an embodiment the rotor brake comprises at least one braking force absorption element non-rotatable connected to said shaft. A stationary brake actuator is mounted to a rotor gear box housing, said stationary brake actuator actuating a braking force transmission element that is functionally coupled to the at least one braking force absorption element so as to exert a braking effect. At least one rotor speed-controlled rotor brake deactivation device is provided for supervision of said stationary brake actuator. The at least one braking force absorption element comprises lamellas connected to said shaft and stationary lamellas non-rotatable connected to said housing, said lamellas interacting with the stationary lamellas. Said lamellas and stationary lamellas are arranged inside of the rotor gear box housing with oil inside. A first advantage of the invention is that the inventive shaft mounted rotor brake is lubricated by gear box oil. A further advantage of the invention is that the gear box oil system is capable to absorb any additional heat due to any friction in the inventive shaft mounted rotor brake and to filter wear particles from the lamellas. The inventive shaft mounted rotor brake allows a durable rotor brake at reduced maintenance, reduced pilots workload and reduced misuse possibilities by a crew/pilot.

According to an embodiment of the invention the shaft is a drive shaft of the main gearbox. By using an already existing drive shaft the amount of additional parts required for the rotor brake system is minimized, leading to a simple and cost-efficient design.

According to a further embodiment of the invention the shaft is an additional shaft coupled to the drive shaft of the main gearbox for more constructive flexibility.

According to a further example the rotor speed-controlled rotor brake deactivation device comprises a ring shoulder integral with the shaft, counter springs, centrifugal slides and a ring slide with conical shape. At nominal rotations per minute (rpm) of the shaft the centrifugal slides are pressed against the counter springs in their outer position distal to the shaft. Due to its conical shape the ring slide can not engage with the centrifugal slide to counter act as an abutment. In case the drive shaft speed is reduced, the centrifugal slides are pushed back by the counter springs to the inner position. If now the rotor brake is actuated, the ring slide engages with the centrifugal slides and the rotor brake is engaged. In case of unintended actuation of the rotor brake above the allowed RPM of the main rotor, the centrifugal slides are not at their inner position and the rotor brake cannot engage.

According to a further example the rotor speed-controlled rotor brake deactivation device is a rotational speed depending brake actuator, actuated by the centrifugal force of rotating masses installed on the rotating shaft. Below the critical main rotor RPM, the actuator allows the actuation of the rotor brake by the pilot, above the critical main rotor RPM, it is not possible to actuate the rotor brake.

According to the invention the rotor brake deactivation device is dependent of the pressure of the gear box oil using the dependency between the pressure of the gear box oil and the rotational speed of a main rotor head to prevent the brake from unintended engagement. This has the advantage, that the oil pressure available in the main gearbox can be used for both the brake actuation as well as the brake control.

A preferred embodiment of the invention is presented with reference to the following description and the attached drawings.
Fig. 1 shows a radial half cross section of a shaft mounted rotor brake according to the invention,
Fig. 2 shows a schematic view of a preferred embodiment of a shaft mounted rotor brake according to the invention,
Fig. 3 shows a cross section of a further preferred embodiment of a shaft mounted rotor brake according to the invention,
Fig. 4 shows a cross section of a first operating condition of the further preferred embodiment of Fig. 3,
Fig. 5 shows a cross section of a second operating condition of the further preferred embodiment of Fig. 3, and
Fig. 6 shows a cross section of a third operating condition of the further preferred embodiment of Fig. 3.

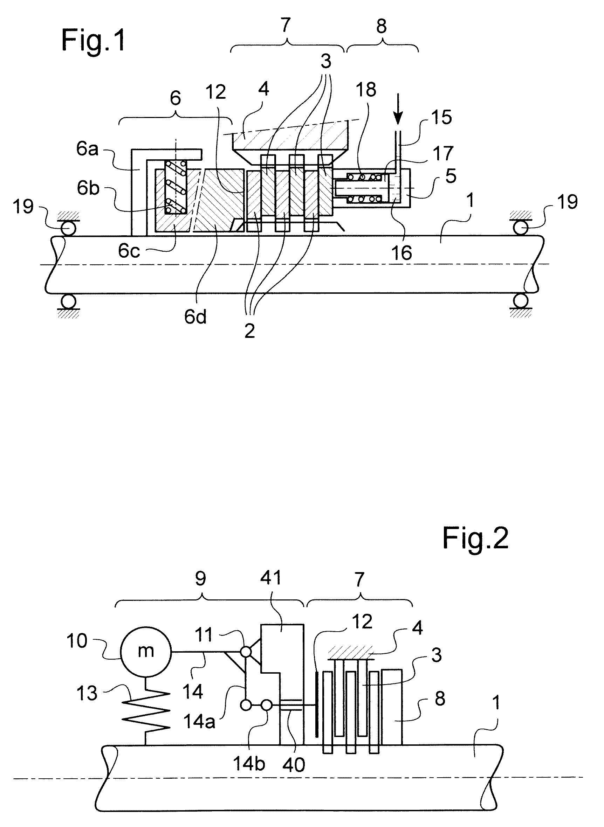

According to Fig. 1 rotating lamellas 2 mounted on a drive shaft 1 of a rotor (not shown) of a helicopter are integrated in a gear box (not shown) with a fix housing 4 encompassing said drive shaft 1. The rotational speed of the drive shaft 1 correlates with the speed of the rotor of the helicopter. The drive shaft 1 is either part of a drive train or part of an additional train dedicated for a rotor brake 7. The drive shaft 1 is supported in bearings 19. The fix housing 4 and the rotor brake 7 are closed around said drive shaft 1 with oil inside.

Several lamellas 2 of the rotor brake 7 are integrated as braking force absorption element and connected via a spline connection to the drive shaft 1. Stationary lamellas 3 as braking force absorption element are mounted in between said lamellas 2 to the housing 4 of the gear box. The brake system 7 is lubricated by the gear box oil capable to absorb the additional heat and to filter any wear particles from the lamellas 2 and stationary lamellas 3.

A rotor brake actuator 8 as stationary brake actuator is actuated hydraulically via a supply line 15 to a hydraulic assembly 5 as a braking force transmission element with a pressure chamber 16 closed by a piston head 17 of said rotor brake actuator 8. A spring 18 pushes the rotor brake actuator 8 away from the rotor brake 7 against the pressure P on the piston head 17 supplied via the supply line 15.

A rotor speed-controlled rotor brake deactivation device 6 is mounted on the shaft 1 to counteract any brake forces from the rotor brake actuator 8 at rotational speeds of the shaft 1 below nominal speed.

The rotor speed-controlled rotor brake deactivation device 6 comprises a ring shoulder 6a, counter springs 6b, conical centrifugal slides 6c radial movable relative to drive shaft 1 and a centrifugal slides 6c radial movable relative to drive shaft 1 and a conical ring slide 6d axially movable on drive shaft 1. The ring shoulder 6a, the counter springs 6b, the conical centrifugal slides 6c and the conical ring slide 6d are concentrically arranged relative to drive shaft 1. The conical centrifugal slides 6c are adjacent to the conical ring slide 6d with the conical centrifugal slides 6c narrowing towards the drive shaft 1 being complementary to the conical ring slide 6d widening towards the drive shaft 1. The conical ring slide 6d is provided with an abutment plate 12 towards the rotor brake 7.

At nominal speed of the drive shaft 1 the centrifugal slides 6c press against the counter springs 6a, said centrifugal slides 6c then being located in an outer position distal to the drive shaft 1. Thus the conical centrifugal slide 6c is removed from the complementary conical ring slide 6d and conical ring slide 6d free to slide axially on drive shaft 1 does not counter act any pressure resulting from brake forces exerted from the rotor brake actuator 8 via the lamellas 2 and stationary lamellas 3. In case of unintended actuation of the rotor brake 7 the slides 6d cannot return to an inner position and the rotor brake 7 cannot engage as the abutment plate 12.

In case the speed of the drive shaft 1 is sufficiently reduced, the conical centrifugal slides 6b are pushed back towards the shaft 1 by the counter springs 6b into the inner position. If now the rotor brake 7 is actuated by the rotor brake actuator 8, the conical ring slide 6d engages with the conical centrifugal slides 6b and the rotor speed-controlled rotor brake deactivation device 6 allows engagement of the rotor brake 7.

According to Fig. 2 the same references are applied for corresponding features.of Fig. 1. An alternative rotor speed-controlled rotor brake deactivation device 9 comprises a mass 10 attached by a retaining spring 13 to the drive shaft 1. The mass 10 rotates with the drive shaft 1. The mass 10 is fixed to an end of a lever 14, rotating with the drive shaft 1. Said lever 14 is pivotable around a point 11 to allow radial displacement of mass 10 relative to the drive shaft 1. A connecting lever 14a is mounted angularly stiff to lever 14 at point 11 and extends with an articulated rod 14b through a linear bearing 40 in a bearing support 41 rotating with the drive shaft 1. The articulated rod 14b is articulated to the connecting lever 14a and to the abutment plate 12, said abutment plate 12 being adjacent to a lateral lamella 2 of the rotor brake 7 mounted to the drive shaft 1. The articulation of the articulated rod 14b serves to compensate length variations during any brake operations.

If the mass 10 is moved outside away from the shaft 1 - due to centrifugal forces from the shaft 1 at nominal rotational speed - the lever 14 is pivoted radial outside. The movement of the lever 14 is transmitted by means of the stiff connection at point 11 to the connecting lever 14a to withdraw the abutment plate 12 via the articulated rod 14b from the lamellas 2, 3 to open the rotor brake 7 at a predetermined rotational speed of the drive shaft 1 related to the spring rate of the retaining spring 13 and the weight of mass 10.

An automatic engagement of the rotor brake 7 is achieved either with pilot activated rotor brake actuator 8 or without pilot activated rotor brake actuator 8.

Independently from the pilot actuator 8 the rotor brake 7 will automatically disengage above a certain speed during start and slow down. The transmission system must cover the produced heat.

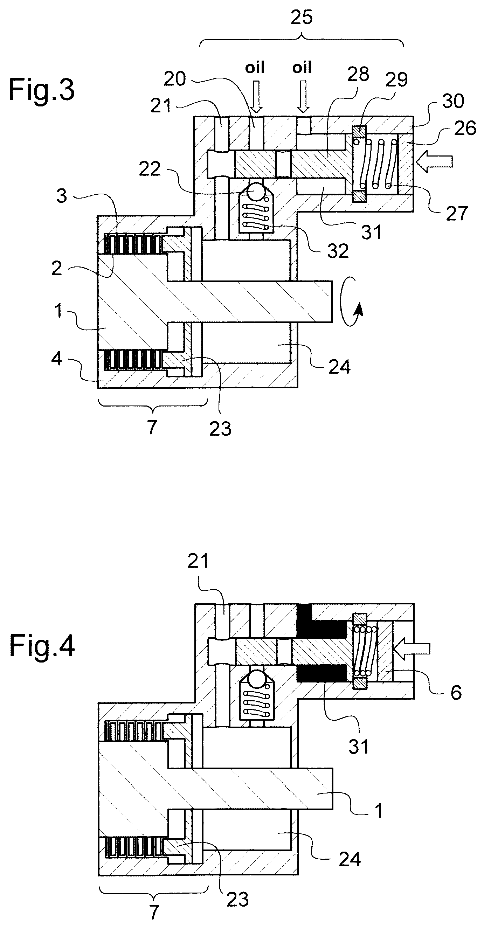

According to Fig. 3 the same references are applied for corresponding features.of Fig. 1 and 2. Actuation of the shaft mounted rotor brake 7 is performed by the gear box oil and an pressure P of the gear box oil is used within the actuator 8 to prevent the rotor brake 7 from unintended engagement.

The rotor brake 7 comprises the concentric lamellas 2 on shaft 1 and the concentric stationary lamellas 3 arranged at the housing 4 of the gear box. A concentric brake piston 23 operates the engagement of the interacting lamellas 2, 3. A pressure P in a chamber 24 of the housing 4 pushes the brake piston 23 towards the rotor brake 7 to operate the engagement of the lamellas 2, 3. The chamber 24 is discharged by an outlet 21.

An oil pressure-controlled rotor brake deactivation device 25 comprises an actuator piston 26 and an actuation spring 27 interacting with a control piston 28 in a control casing 30. The operating range of the control piston 28 is limited by an abutment ring 29 in the control casing 30. An oil supply line provides oil pressure to a control piston chamber 31. An oil pressure line 20 to chamber 24 is controlled by the control piston 28 and a non return valve 22 is supported by a non return spring 32.

According to Fig. 4 the shaft mounted rotor brake 7 of Fig. 3 is shown in a first operating condition. The actuator piston 26 is actuated at nominal speed of the rotor, e. g. unintentionally by the pilot. Oil pressure P is supplied into the control piston chamber 31 pressing the control piston 28 against the abutment ring 29 in its initial position. Thus the outlet 21 to chamber 24 remains open, no pressure is exerted to brake piston 23 and the rotor brake 7 is not engaged.

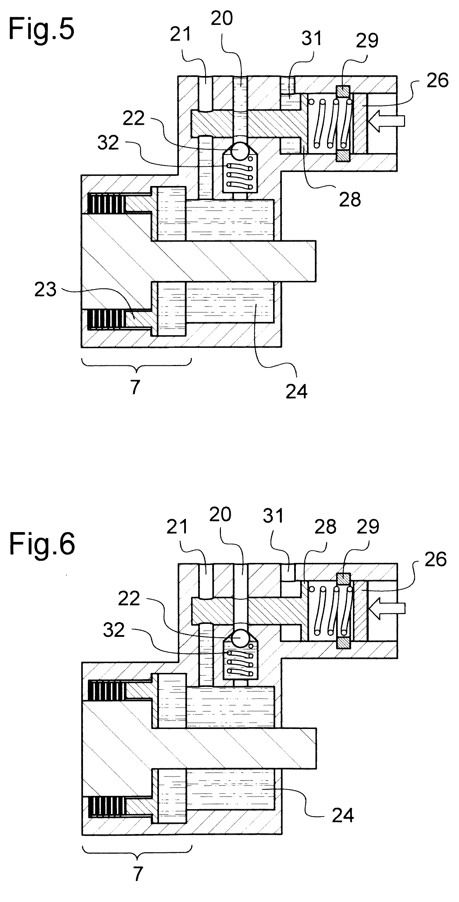

According to Fig. 5 the shaft mounted rotor brake 7 of Fig. 3 is shown in a further operating condition. The speed of the rotor is decreased and consequently the oil pressure supplied to the control piston chamber 31 is reduced. Actuation of the actuator piston 26 lifts the control piston 28 off the abutment ring 29 piston 26 lifts the control piston 28 off the abutment ring 29 towards its alternative abutment position blocking the outlet 21 and opening a passage from the oil pressure line 20 to chamber 24 by pushing open the non return valve 22 against the action from the non return spring 32. The pressure from the oil pressure line 20 in chamber 24 is exerted to brake piston 23 and the rotor brake 7 is engaged.

According to Fig. 6 the shaft mounted rotor brake 7of Fig. 3 is shown in a still further operating condition. The speed of the rotor is still decreased and there is no more any oil pressure supplied to the control piston chamber 31. Ongoing actuation of the actuator piston 26 keeps the control piston 28 off the abutment ring 29 at its alternative abutment position still blocking the outlet 21 and keeping open the passage from the oil pressure line 20 to chamber 24. Once the chamber 24 is filled with gear box oil the non return valve 22 is set back on its seat by the action from the non return spring 32 to block the oil pressure line 20. The pressure in chamber 24 is maintained and the rotor brake 7 remains engaged to prevent the rotor from turning.

To start the rotor the actuator piston 26 is released and the control piston 28 is reset against the abutment ring 29 by the increasing oil pressure, counteracting the actuation spring 27. Thus the control piston 28 opens the outlet 21 and closes the passage from the oil pressure line 20 relieving any pressure in chamber 24. The rotor brake 7 opens and the rotor is prepared for start.

### Reference List

- 1: driven shaft
- 2: lamellas
- 3: stationary lamellas
- 4: fix housing
- 5: hydraulic assembly
- 6: rotor speed-controlled rotor brake deactivation device
- 6a: ring shoulder
- 6b: counter spring
- 6c: conical centrifugal slides
- 6d: conical ring slide
- 7: rotor brake
- 8: rotor brake actuator
- 9: rotor speed-controlled rotor brake deactivation device
- 10: mass
- 11: point
- 12: abutment plate
- 13: retaining spring
- 14: lever
- 15: supply line
- 16: pressure chamber
- 17: piston head
- 18: spring
- 19: bearings
- 20: oil pressure line
- 21: outlet
- 22: non return valve
- 23: brake piston
- 24: chamber
- 25: oil pressure-controlled rotor brake deactivation device
- 26: actuation piston
- 27: actuation spring
- 28: control piston
- 29: abutment ring
- 30: control casing
- 31: control piston chamber
- 32: non return spring
- 14a: connecting lever
- 14b: articulated lever
- 40: linear bearing
- 41: bearing support

## Claims

1. A rotor brake (7) with a rotatable shaft (1) comprising:
- at least one braking force absorption element mounted to said rotatable shaft (1);
- a rotor gear box with a gear box housing (4),
- a stationary brake actuator (8, 24) mounted to said rotor gear box housing (4), and a hydraulic assembly (5),
- a braking force transmission element (17, 23), said stationary brake actuator (8, 24) actuating said braking force transmission element (17, 23) that is functionally coupled to the at least one braking force absorption element, so as to exert a braking effect; and
- at least one rotor brake deactivation device (6, 9, 25),
wherein the hydraulic assembly (5) actuates the rotor brake (7) **characterized in that** the braking force absorption element (17, 23) comprises lamellas (2) interacting with stationary lamellas (3), said lamellas (2) and stationary lamellas (3) being arranged inside of the rotor gear box housing (4) with oil inside and **in that** the rotor brake deactivation device (25) is dependent of the rotor speed-controlled pressure P of the gear box oil.

2. The rotor brake (7) according to claim 1, **characterized in that** the rotatable shaft is the drive shaft (1).

3. The rotor brake (7) according to claim 1, **characterized in that** the rotatable shaft (1) is an additional shaft coupled to the drive shaft.

## Patentansprüche

1. Rotorbremse (7) mit einer drehbaren Welle (1), mit
- mindestens einem Bremskraftabsorptionselement, welches auf der drehbaren Welle (1) montiert ist,
- einem Rotorgetriebe mit einem Getriebegehäuse (4),
- einem feststehenden Bremsenbetätigungselement (8, 24), welches an dem Getriebegehäuse (4) montiert ist, und einer Hydraulikeinheit (5),
- einem Bremskraftübertragungselement (17, 23), wobei das feststehende Bremsenbetätigungselement (8, 24) das Bremskraftübertragungselement (17, 23) betätigt, welches funktional an das mindestens eine Bremskraftabsorptionselement gekoppelt ist, um einen Bremseffekt auszuüben, und
- mindestens eine Rotorbremsendeaktivierungsvorrichtung (6, 9, 25), wobei die Hydraulikeinheit (5) die Rotorbremse (7) betätigt,
**dadurch gekennzeichnet, dass** das Bremskraftabsorptionselement (17, 23) Lamellen (2) aufweist, die mit feststehenden Lamellen (3) zusammenwirken, wobei die Lamellen (2) und die feststehenden Lamellen (3) innerhalb des Getriebegehäuses (4), in dem sich Öl befindet, angeordnet sind, und dadurch, dass die Rotorbremsendeaktivierungsvorrichtung (25) von dem rotorgeschwindigkeitsgesteuerten Druck (P) des Getriebeöls abhängt.

2. Rotorbremse (7) nach Anspruch 1,
**dadurch gekennzeichnet, dass** die drehbare Welle die Antriebswelle (1) ist.

3. Rotorbremse (7) nach Anspruch 1,
**dadurch gekennzeichnet, dass** die drehbare Welle (1) eine zusätzliche Welle ist, die an die Antriebswelle gekoppelt ist.

## Revendications

1. Un frein de rotor (7) avec un arbre rotatif (1) comprenant :
- au moins un élément d'absorption de la force de freinage monté sur ledit arbre rotatif (1);
- une boîte de transmission de rotor avec un carter de boîte de transmission (4),
- un actionneur de frein fixe (8, 24) monté sur ledit carter de boîte de transmission de rotor (4), et un ensemble hydraulique (5),
- un élément de transmission de la force de freinage (17, 23), ledit actionneur de frein fixe (8, 24) actionnant ledit élément de transmission de la force de freinage (17, 23) qui est fonctionnellement couplé à l'au moins un élément d'absorption de la force de freinage, de façon à exercer un effet de freinage ; et
- au moins un système de désactivation du frein de rotor (6, 9, 25),
dans lequel l'ensemble hydraulique (5) **caractérisé en ce que**
l'élément d'absorption de la force de freinage (17, 23) comprend des lamelles (2) et interagissant avec des lamelles fixes (3), lesdites lamelles (2) et lamelles fixes (3) étant disposées à l'intérieur du carter de boîte de transmission de rotor (4) ayant de l'huile à l'intérieur et **en ce que**
le dispositif de désactivation du frein de rotor (25) est dépendant de la pression P de l'huile de la boîte de transmission qui est commandée par la vitesse de rotation du rotor.

2. Le frein de rotor (7) selon la revendication 1, **caractérisé en ce que** l'arbre rotatif est l'arbre d'entrainement (1).

3. Le frein de rotor (7) selon la revendication 1, **caractérisé en ce que** l'arbre rotatif (1) est un arbre additionnel accouplé à l'arbre d'entrainement.
